# EUROPÄISCHE PATENTSCHRIFT

(11) **EP 0 412 575 B1**
(45) Veröffentlichungstag und Bekanntmachung des Hinweises auf die Patenterteilung: **03.01.1996**
(21) Anmeldenummer: 90116389.9
(22) Anmeldetag: 09.08.1990
(51) Int. Cl.: H04J 3/07

(54) **Stopfentscheidungsschaltung**
Stuffing decision circuit
Circuit de décision de justification

(30) Priorität: 09.08.1989 DE 3926251
(43) Veröffentlichungstag der Anmeldung: 13.02.1991
(73) Patentinhaber: Philips Patentverwaltung GmbH, D-22335 Hamburg (DE); Philips Electronics N.V., NL-5621 BA Eindhoven (NL)
(72) Erfinder: Urbansky, Ralph, Dipl.-Ing., D-8501 Schwaig 2 (DE); Robledo, Miguel, Dr.Ing., D-8500 Nürnberg 10 (DE)
(74) Vertreter: Peuckert, Hermann, Dipl.-Ing.

(56) Entgegenhaltungen:
- EP-A- 0 035 795
- PATENT ABSTRACTS OF JAPAN vol. 7, no. 65 (E-165)(1210) 18. März 1983 & JP- A-57 212 842 (NIPPON DENKI K.K.) 27. Dezember 1982
- PATENT ABSTRACTS OF JAPAN vol. 11, no. 65 (E-484)(2512) 27. Februar 1987 & JP- A-61 224 740 (FUJITSU LIMITED) 6. Oktober 1986

## Beschreibung

Die Erfindung bezieht sich auf einen Multiplexer zur Einfügung eines ersten Signals in ein zweites, nach Rahmen strukturiertes Signal mit einer Stopfentscheidungsschaltung, die
- zur Festlegung mindestens einer Stopfentscheidung pro Rahmen vorgesehen ist und
- zur Verschiebung des Zeitpunktes der Stopfentscheidung, der von einem mit einem ersten Takt getakteten Mittel festgelegt wird, durch weitere Mittel vorgesehen ist.

Eine Schaltungsanordnung zur Anpassung der Bitraten zweier Signale ist z.B. in der DE 39 20 391 beschrieben. Derartige Schaltungsanordnungen werden in der Nachrichtenübertragung z.B. in plesiochronen Multiplexern benötigt, die plesiochrone Signale bündeln. Zwei binäre Signale heißen plesiochron, wenn ihre Bitraten nominell gleich sind, tatsächlich aber innerhalb einer gegebenen Toleranz vom Nennwert abweichen können. Bevor plesiochrone Signale durch einen plesiochronen Multiplexer zusammengefaßt werden können, müssen sie alle auf die gleiche Bitrate gebracht werden, die (bei sogenannter positiver Stopftechnik) etwas höher liegt als die Bitrate, die die einzelnen plesiochronen Signale haben. Dieser Bitratenunterschied wird u.a. dadurch ausgeglichen, daß in das Signal höherer Bitrate von Zeit zu Zeit sogenannte Stopfbits aufgenommen werden. Auf der Empfangsseite ist dann eine entsprechende Schaltungsanordnung zu verwenden, die einem plesiochronen Demultiplexer nachgeschaltet ist, um die Stopfbits wieder zu entfernen und die Bitrate auf ihren ursprünglichen Wert zu bringen.

Die in der DE 39 20 391 beschriebene Schaltungsanordnung zur Bitratenanpassung enthält auch eine Stopfentscheidungsschaltung. Die Stopfentscheidungsschaltung entscheidet anhand des Ausgangssignals eines Phasenvergleichers, der die Schreib- und Leseadressen für einen Pufferspeicher vergleicht, ob statt eines Signalbits ein Stopfbit übertragen werden muß. Um die Stopfbits wiederfinden zu können, ist das binäre Signal mit der höheren Bitrate - also das Signal in das Stopfbits eingefügt werden müssen - nach Rahmen strukturiert. Beispiele für derartige Rahmen sind die sogenannten synchronen Transportmodulen STM-N (vgl. hierzu z.B. CCITT-Empfehlungsentwürfe G 707, G 708 und G 709). In einem solchen Rahmen sind sämtliche Bits des Signals niederer Bitrate untergebracht, die Stopfbits, Stopfinformationsbits sowie weitere Hilfsinformationen. Die Stopfinformationsbits geben durch ihren Wert an, ob das Bit an der Stelle des Rahmens, an der eine Stopfmöglichkeit vorgesehen ist, ein Stopfbit oder ein Informationsbit des ersten binären Signales ist.

Damit die Stopfinformationsbits gesetzt werden können, muß die Entscheidung, ob gestopft werden soll oder nicht (Stopfentscheidung) zeitlich vor der Stelle in einem Rahmen gefällt werden, die für die Stopfinformationsbits vorgesehen ist, und damit auch zeitlich vor den Stopfstellen. In einem STM-1-Rahmen z.B. bedeutet das, daß die Stopfentscheidung größenordnungsmäßig eine Rahmenzeilenlänge vor der Stopfstelle gefällt werden sollte.

Eine ideale Stopfentscheidungsschaltung würde die relative Lage der beiden Signale zueinander laufend überwachen und in dem Augenblick ein Stopfbit einfügen, in dem die Verschiebung der beiden Signale geanu ein Bit beträgt. Bei der Rückgewinnung des Signals niederer Bitrate auf dem Empfängerseite - insbesondere des zugehörigen Taktsignals - durch eine Phasenregelschleife würde sich wegen der notwendigen Entfernung der Stopfbits ein (abhängig vom Aufwand) relativ geringer Jitter ergeben.

Im realen Fall sind nur bestimmte Bitpositionen im Rah men vorgesehen, in die - abhängig von der Stopfentscheidung - ein Stopfbit eingefügt werden darf. Mit dem Stopfen muß also immer gewartet werden, bis der Augenblick gekommen ist, in dem gestopft werden darf. Hieraus ergibt sich gegenüber dem idealen Fall ein zusätzlicher Jitter, der sogenannte Wartezeitjitter (vergleiche hierzu: Duttweiler, D.L.: Waiting time jitter. Bell Syst. Tech. J. 51, (1972), Seiten 165 bis 207). Weicht die Stopfrate nur geringfügig von einfachen Brüchen ab, d.h. von Brüchen, bei denen Zähler und Nenner kleine, ganze und teilerfremde Zahlen (z.B. 2/3 oder 4/5) sind, so enthält der Wartezeitjitter niederfrequente Anteile mit besonders hoher Amplitude. Der Grund hierfür ist der, daß die Stopfvorgänge auf der Sendeseite überwiegend regelmäßig erfolgen, d.h. periodisch sind, jedoch hin und wieder ein Stopfbit eingefügt werden muß, das die Periodizität der Stopfvorgänge um ein Vielfaches vergrößert. Der damit verbundene niederfrequente Jitter kann mit einer Phasenregelschleife überhaupt nicht oder nur mit sehr großem Aufwand entfernt werden.

Des weiteren sind aus den Dokumenten "PATENT ABSTRACTS OF JAPAN, vol. 7, no. 65 (E-165)(1210) 18.03.1983 & JP-A-57 212 842 (NIPPON DENKI K.K.) 27.12.1982", "PATENT ABSTRACTS OF JAPAN, vol. 11, no. 65 (E-484) (2512) 27.02.1987 & JP-A-61 224 740 (FUJITSU LIMITED) 6.10.1986" oder EP-A-0 035 795 Schaltungen zur Jitterreduzierung bekannt, die jeweils einen ähnlichen Schaltungsaufbau haben. In einen Pufferspeicher (elastic memory) werden Daten eines ersten Signals mittels eines Schreibzählers (write counter) eingeschrieben. Den Auslesevorgang aus dem Pufferspeicher steuert ein Lesezähler (read counter), der über eine Torschaltung (inhibit circuit) einen Takt von einem Anschluß erhält. Die Torschaltung läßt den Takt nicht zum Lesezähler, wenn eine Stopfentscheidungsschaltung (stuff control) ein entsprechendes Sperrsignal zur Torschaltung liefert. Eine Phasenvergleichsschaltung (phase lag monitor) vergleicht jeweils einen Ausgang des Lese- und Schreibzählers. Das Vergleichsergebnis wird der Stopfentscheidungsschaltung mitgeteilt. In Abhängigkeit vom Vergleich wird in der Stopfentscheidungsschaltung entschieden, daß gestopft werden muß. Um den Jitter zu reduzieren wird der eigentliche Stopfvorgang von einem Zufallsgenerator (random pulse generator) abhängig gemacht, der von demselben Takt wie der Lesezähler getaktet wird. Die eigentliche Stopfentscheidung wird immer um ganzzahlige Vielfache des Taktes durch den Zufallsgenerator verschoben, da Lesezähler und Zufallsgenerator miteinander korrelierte Takte (den gleichen Takt) erhalten. Die Stopfentscheidung ist außerdem nicht rahmenabhängig.

Der Erfindung liegt die Aufgabe zugrunde, eine Stopfentscheidungsschaltung der eingangs genannten Art anzugeben, bei der der niederfrequente Jitter weitgehend vermieden wird.

Die Lösung dieser Aufgabe ist dadurch gekennzeichnet, daß die weiteren Mittel zum Empfang eines zweiten, gegenüber dem ersten Takt unterschiedlichen Taktes vorgesehen sind.

Durch die zufallsmäßige Verschiebung des Zeitpunkts, zu dem eine Stopfentscheidung gefällt wird, ergibt sich eine größere Unregelmäßigkeit der Stopfvorgänge, was zur Folge hat, daß keine niederfrequenten Anteile des Jitters mehr auftreten. Der ohne die erfindungsgemäßen Maßnahmen auftretende niederfrequente Jitter ist durch die Modulation des Entscheidungszeitpunktes zu höheren Frequenzen transformiert worden. Die Entfernung des Jitters mit hohen Frequenzen bereitet keinerlei Schwierigkeiten.

Weiter ist vorgesehen, daß die Mittel den Zeitpunkt der Stopfentscheidung zufalls- oder pseudozufallsmäßig um Zeiten verschieben, die klein gegen eine Rahmenlänge sind.

In einer Ausführungsform der Erfindung sind Stufen eines Rahmenzählers mit ersten Eingängen eines Vergleichers und Stufen eines weiteren Zählers oder Pseudozufallsgenerators mit zweiten Eingängen des Vergleichers verbunden. Eine Stopfentscheidung wird gefällt, wenn an den ersten und den zweiten Eingängen des Vergleichers gleiche Daten anliegen. Der weitere Zähler wird mit einem Takt getaktet wird, der sich vom Takt für den Rahmenzähler unterscheidet.

In einer Weiterbildung der Erfindung ist die Taktfrequenz für den weiteren Zähler wesentlich kleiner ist als die Taktfrequenz für den Rahmenzähler und der weitere Zähler durchläuft zyklisch das Zahlenintervall zwischen einem minimalen und einem maximalen Stand.

Ein Pufferspeicher ist zum seriellen Einschreiben des ersten Signals vorgesehen. Ein Schreibzähler ist zur Erzeugung von Schreibadressen für den Pufferspeicher vorgesehen. Der Schreibzähler ist mit Eingängen eines Multiplexers verbunden ist, dessen Ausgang mit einem Flip-Flop verbunden ist und der von einem Lesezähler ebenso adressiert wird wie ein mit den Ausgängen des Pufferspeichers verbundener Multiplexer. Der Lesezähler wird von dem Rahmenzähler und das Flip-Flop von dem Vergleicher gesteuert.

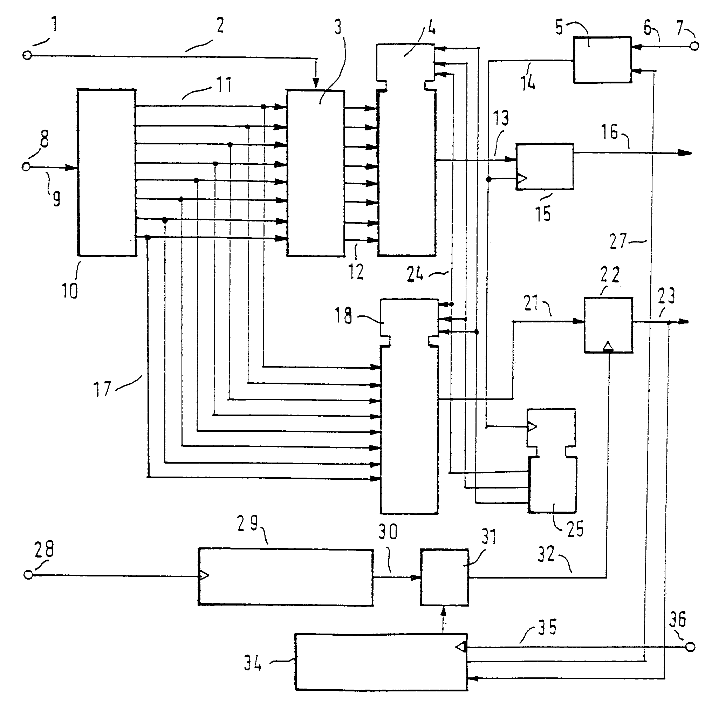

Anhand der Figur soll die Erfindung und ein Ausführungsbeispiel von ihr näher erläutert werden.

Die Figur zeigt den Einsatz der erfindungsgemäßen Schaltung in einer Anordnung zur Bitratenanpassung.

In der Figur liegt an einer Klemme 1 ein erstes binäres Signal mit einer nominellen Bitrate von 34 Mbit/s an, das durch die Schaltung nach der Figur in einen 140 MBit/s-Rahmen durch einen nicht gezeigten Multiplexer eingefügt werden soll. Über eine Leitung 16 wird diesem Multiplexer das vorstrukturierte Signal zugeführt, das so weit an diesen Rahmen angepaßt ist, als es schon die richtige Verteilung der Informationsbits und der variablen Stopfbits enthält, während alle anderen zusätzlichen Daten durch den Multiplexer in die schon bestehenden Lücken eingefügt werden.

Das erste binäre Signal wird über eine Leitung 2 einem Pufferspeicher 3 zugeführt, in den es seriell eingeschrieben wird. Die Schreibadressen erzeugt ein Johnson-Zähler 10, der mit dem zugehörigen Bittakt getaktet wird. Dieser Bittakt liegt an einer Klemme 8 an und wird über eine Leitung 9 dem Takteingang des Johnson-Zählers 10 (Schreibzähler) zugeführt. Der Schreibzähler 10 hat acht Ausgänge, die über Leitungen 11 mit den Adreßeingängen des Speichers 3 verbunden sind. Auf jeder Leitung der Ausgänge 11 gibt der Johnson-Zähler 10 Taktsignale ab, deren Periodendauer acht mal so groß ist wie die Periodendauer des Bittaktes an der Klemme 8 und deren Flanken jeweils um eine Taktperiode des Bittaktes an der Klemme 8 verschoben sind.

Die Ausgänge des Johnson-Zählers 10 sind über Leitungen 17 mit acht Eingängen eines Multiplexers 18 verbunden. Ein identischer Multiplexer 4 ist über Leitungen 12 ebenfalls mit den acht Ausgängen des Pufferspeichers 3 verbunden.

Die beiden Multiplexer 4 und 18 werden über Leitungen 24 gleichzeitig von einem dreistufigen Lesezähler 25 adressiert. Der Ausgang des Multiplexers 4 ist über eine Leitung 13 an den Dateneingang eines Flip-Flops 15 und der Ausgang des Multiplexers 18 über eine Leitung 21 an den Dateneingang eines Flip-Flops 22 geführt.

Mit dem Flip-Flop 22 wird das Ausgangssignal des Multiplexers 18 abgefragt. Dieser Abfragezeitpunkt ist identisch mit dem Zeitpunkt, zu dem eine Stopfentscheidung gefällt wird. Das Ergebnis der Abfrage, eine binäre Null oder eine binäre Eins, gibt an, ob die Zählerstandsdifferenz der Zähler 10 und 25 zu groß oder zu klein ist. Ist sie zu groß, muß er angehalten werden. Das Anhalten wird durch einen Rahmenzähler 34 über eine Leitung 27 gesteuert.

Das Ausgangssignal des Flip-Flops 22 wird über Leitungen 23 sowohl dem Rahmenzähler 34 als auch dem nichtgezeigten Multiplexer zugeführt. Der Rahmenzähler 34 wird von einem takt getaktet, der an einer Klemme 36 anliegt. Der gleiche Takt liegt auch an einer Klemme 7 an und wird über eine Leitung 6 einem UND-Gatter 5 zugeführt, das über die Leitung 27 vom Rahmenzähler geschlossen oder geöffnet wird.

Mit dem Ausgangssignal des UND-Gatters 5 wird das Flip-Flop 15 und der Lesezähler 25 getaktet. Das UND-Gatter 5 wird vom Rahmenzähler 34 gesperrt, wenn in das zweite Signal Stopfbits oder andere zusätzliche Bits eingefügt werden müssen.

Der Rahmenzähler 34 besteht im wesentlichen aus einem mehrstufigen Zähler, der die Bits eines Rahmens zählt und ausreichend Vergleichsschaltungen enthält, mit denen die Zeitpunkte festgelegt werden, zu denen die oben erwähnten Zusatzbits eingefügt werden sollen.

Zur Variation des Abfragezeitpunkts ist ein Vergleicher 31 vorgesehen, dessen einem Eingang der Stand des Rahmenzählers 34 zugeführt wird und an dessen anderem Eingang 30 der Stand eines weiteren Zählers 29 anliegt. Dieser Zähler 29 wird mit einem - gegenüber dem Bittakt an der Klemme 36 - langsamen Takt getaktet. Der Zähler 29 läuft zyklisch zwischen einem minimalen und einem maximalen Zählerstand. Minimum und Maximum sind so gewählt, daß sich einmal pro Rahmenzeile eine Gleichheit der Stände der Zähler 29 und 34 ergibt und daß sich der Zeitpunkt, zu dem beide Zählerstände gleich sind, geringfügig relativ zum Rahmen verschiebt.

Die Frequenz des Taktes und der Unterschied zwischen dem maximalen und minimalen Zählerstand für den (vergleiche Klemme 28) Zähler 29 ist so zu wählen, daß das Ausgangs-signal des Vergleichers 31 eine Periodendauer besitzt, die extrem groß ist gegen die Rahmenlänge. Nur dann ist gewährleistet, daß die Verschiebungen des Abfrage- bzw. Entscheidungszeitpunktes pseudozufallsmäßig erfolgen.

## Patentansprüche

1. Multiplexer zur Einfügung eines ersten Signals in ein zweites, nach Rahmen strukturiertes Signal mit einer Stopfentscheidungsschaltung, die
- zur Festlegung mindestens einer Stopfentscheidung pro Rahmen vorgesehen ist und
- zur Verschiebung des Zeitpunktes der Stopfentscheidung, der von einem mit einem ersten Takt getakteten Mittel (34) festgelegt wird, durch weitere Mittel (29, 31) vorgesehen ist,
dadurch gekennzeichnet,
daß die weiteren Mittel (29, 31) zum Empfang eines zweiten, gegenüber dem ersten Takt unterschiedlichen Taktes vorgesehen sind.

2. Multiplexer nach Anspruch 1,
dadurch gekennzeichnet,
daß die Mittel (29, 31, 34) den Zeitpunkt der Stopfentscheidung zufalls- oder pseudozufallsmäßig um Zeiten verschieben, die klein gegen eine Rahmenlänge sind.

3. Multiplexer nach Anspruch 1 oder 2,
dadurch gekennzeichnet,
daß Stufen eines Rahmenzählers (34) mit ersten Eingängen eines Vergleichers (31) und Stufen eines weiteren Zählers (29) oder Pseudozufallsgenerators mit zweiten Eingängen des Vergleichers (31) verbunden sind, daß eine Stopfentscheidung gefällt wird, wenn an den ersten und den zweiten Eingängen des Vergleichers gleiche Daten anliegen und daß der weitere Zähler (29) mit einem Takt getaktet wird, der sich vom Takt für den Rahmenzähler (34) unterscheidet.

4. Multiplexer nach Anspruch 3,
dadurch geknnzeichnet,
daß die Taktfrequenz für den weiteren Zähler (29) wesentlich kleiner ist als die Taktfrequenz für den Rahmenzähler (34) und der weitere Zähler (29) zyklisch das Zahlenintervall zwischen einem minimalen und einem maximalen Stand durchläuft.

5. Multiplexer nach Anspruch 3 oder 4,
dadurch gekennzeichnet,
daß ein Pufferspeicher (3) zum seriellen Einschreiben des ersten Signals vorgesehen ist,
daß ein Schreibzähler (10) zur Erzeugung von Schreibadreseen für den Pufferspeicher (3) vorgesehen ist, daß der Schreibzähler (3) mit Eingängen eines Multiplexers (18) verbunden ist, dessen Ausgang mit einem Flip-Flop (22) verbunden ist und der von einem Lesezähler (25) ebenso adressiert wird wie ein mit den Ausgängen des Pufferspeichers (3) verbundener Multiplexer (4), und daß der Lesezähler (25) von dem Rahmenzähler (34) und das Flip-Flop (22) von dem Vergleicher (31) gesteuert wird.

## Claims

1. Multiplexer for inserting a first signal in a second, frame-structured signal, comprising a stuffing decision circuit which
- is provided for defining at least one stuffing decision per frame and
- for shifting by further means (29, 31) the stuffing decision instant which instant is determined by a determining means (34) timed with a first clock, characterized in that the further means (29, 31) are provided for receiving a second clock which is different from the first clock.

2. Multiplexer as claimed in Claim 1, characterized in that the means (29, 31, 34) shift the instant of the stuffing decision in a random or pseudo-random manner by periods of time which are small compared with a frame length.

3. Multiplexer as claimed in Claim 1 or 2, characterized in that stages of a frame counter (34) are connected to first inputs of a comparator and stages of a further counter (29) or pseudo-random generator to second inputs of the comparator (31), in that a stuffing decision is made when identical data are available on the first and second inputs of the comparator and in that the further counter (29) is timed with a clock which is different from that of the frame counter (34).

4. Multiplexer as claimed in Claim 3, characterized in that the clock frequency for the further counter (29) is considerably smaller than the clock frequency for the frame counter (34) and the further counter (29) cyclically passes through the count interval between a minimum and a maximum count.

5. Multiplexer as claimed in Claim 3 or 4, characterized in that a buffer (3) is provided for serially entering the first signal, in that a write counter (10) is provided for generating write addresses for the buffer (3), in that the write counter (3) is connected to inputs of a multiplexer (18) whose output is connected to a flip-flop (22) and which is also addressed by a read counter (25) in the same manner as a multiplexer (4) connected to the outputs of the buffer (3), and in that the read counter (25) is controlled by the frame counter (34) and the flip-flop (22) is controlled by the comparator (31).

## Revendications

1. Multiplexeur permettant d'insérer un premier signal dans un deuxième signal structuré selon une trame à l'aide d'un circuit de décision de bourrage qui :
- est prévu pour arrêter au moins une décision de bourrage par trame, et
- est prévu pour décaler par d'autres moyens (29, 31) l'instant de la décision de bourrage, qui est arrêté par un moyen (34) cadencé à une première cadence, caractérisé en ce que les autres moyens (29, 31) sont prévus pour recevoir une deuxième cadence différente de la première.

2. Multiplexeur selon la revendication 1, caractérisé en ce que les moyens (29, 31, 34) décalent l'instant de la décision de bourrage de manière aléatoire ou pseudo-aléatoire de périodes qui sont courtes par rapport à une longueur de trame.

3. Multiplexeur selon la revendication 1 ou 2, caractérisé en ce que des étages d'un compteur de trames (34) sont connectés à des premières entrées d'un comparateur (31) et des étages d'un autre compteur (29) ou générateur d'impulsions pseudo-aléatoires sont connectés à des deuxièmes entrées du comparateur (31), en ce qu'une décision de bourrage intervient lorsque des données identiques s'appliquent aux premières et aux deuxièmes entrées du comparateur et en ce que l'autre compteur (29) est cadencé à une cadence qui se distingue de la cadence du compteur de trames (34).

4. Multiplexeur selon la revendication 3, caractérisé en ce que la fréquence de cadence pour l'autre compteur (29) est sensiblement plus petite que la fréquence de cadence pour le compteur de trames (34) et l'autre compteur (29) parcourt de manière cyclique l'intervalle de comptage entre un état minimum et un état maximum.

5. Multiplexeur selon la revendication 3 ou 4, caractérisé en ce qu'il est prévu une mémoire tampon pour l'inscription sérielle du premier signal, en ce qu'un compteur d'écriture (10) est prévu pour la production d'adresses d'écriture pour la mémoire tampon (3), en ce que le compteur d'écriture (10) est connecté à des entrées d'un multiplexeur (18) dont la sortie est raccordée à une bascule (22) et qui est adressé par un compteur de lecture (25) tout comme un multiplexeur (4) raccordé aux sorties de la mémoire tampon (3), et en ce que le compteur de lecture (25) est commandé par le compteur de trames (34) et la bascule (22) par le comparateur (31).
